Europäisches Patentamt

(19) European Patent Office

Office européen des brevets

(11) Numéro de publication: **0 187 081**
**B1**

(12) **FASCICULE DE BREVET EUROPEEN**

(45) Date de publication du fascicule du brevet: **14.11.90**

(21) Numéro de dépôt: **85402410.6**

(22) Date de dépôt: **04.12.85**

(51) Int. Cl.⁵: **F 02 P 5/04,** G 01 L 23/22, G 06 F 15/36

(54) **Procédé et chaîne de traitement du signal analogique de sortie d'un capteur.**

(30) Priorité: **21.12.84 FR 8419620**

(43) Date de publication de la demande: **09.07.86 Bulletin 86/28**

(45) Mention de la délivrance du brevet: **14.11.90 Bulletin 90/46**

(84) Etats contractants désignés: **DE GB IT NL**

(56) Documents cités:
EP-A-0 018 858
DE-A-2 605 335
GB-A-2 007 392
US-A-3 478 328
US-A-4 023 019
US-A-4 031 364
US-A-4 054 786
US-A-4 290 398

(73) Titulaire: **Siemens Aktiengesellschaft Wittelsbacherplatz 2 D-8000 München 2 (DE)**

(72) Inventeur: **Mate, Jean-Luc 11, rue Coupeau F-31300 Toulouse (FR)**

Courier Press, Leamington Spa, England.

## Description

La présente invention concerne un procédé et une chaîne de traitement du signal analogique de sortie d'un capteur, notamment d'un capteur accélérométrique utilisé dans un système de détection de cliquetis pour moteur à combustion interne.

Les systèmes de détection de cliquetis sont de plus en plus utilisés sur les moteurs à combustion interne car ils permettent, pour un moteur de référence, de régler de manière optimale un ou plusieurs paramètres de fonctionnement, en particulier l'avance à l'allumage, la richesse du mélange et la pression de suralimentation dans le cas d'un moteur suralimenté, sans avoir à prendre une marge de sécurité vis à vis des problèmes de dispersion entre moteurs, de vieillissement, ou de changement d'environnement (température ambiante, humidité, etc...).

Les systèmes de détection de cliquetis connus comprennent généralement un capteur de cliquetis, tel qu'un accéléromètre monté sur la culasse du moteur, une chaîne de traitement et de mise en forme du signal de sortie du capteur accélérométrique, et un circuit électronique, tel qu'un calculateur numérique, qui compare le signal utile issu de la chaîne de traitement à un signal de référence et délivre un signal de détection de cliquetis lorsque le signal utile dépasse d'une valeur prédéterminée le signal de référence.

La détection s'opère alors suivant deux grands procédés:

détermination du cliquetis par la surveillance d'un bruit "maximum" correspondant à la valeur de crête du signal de sortie du capteur, tel que décrit par exemple dans le document DE 2 605 335, ou

détermination du cliquetis par la surveillance d'un bruit moyen correspondant à une moyenne arithmétique ou exponentielle de la valeur de ce signal, comme décrit dans GB—A—2 007 393.

D'autre part, il est connu que le cliquetis d'un moteur est susceptible d'apparaître au moment où la pression dans la chambre de combustion est maximale et que ce phénomène ne peut se produire que dans une fenêtre angulaire restreinte du cycle qui dépend du moteur et de ses paramères de réglage.

C'est la raison pour laquelle la chaîne de traitement d'un tel système de détection de cliquetis est adaptée pour prendre en compte le signal de sortie du capteur accélérométrique dans une fenêtre angulaire optimisée pour donner le meilleur rapport signal/bruit entre une condition de fonctionnement avec cliquetis et une condition de fonctionnement sans cliquetis et, en particulier, cette fenêtre est choisie de façon que les fermetures des soupapes génératrices de vibrations qui pourraient être interprétées faussement comme du cliquetis interviennent en dehors de la fenêtre.

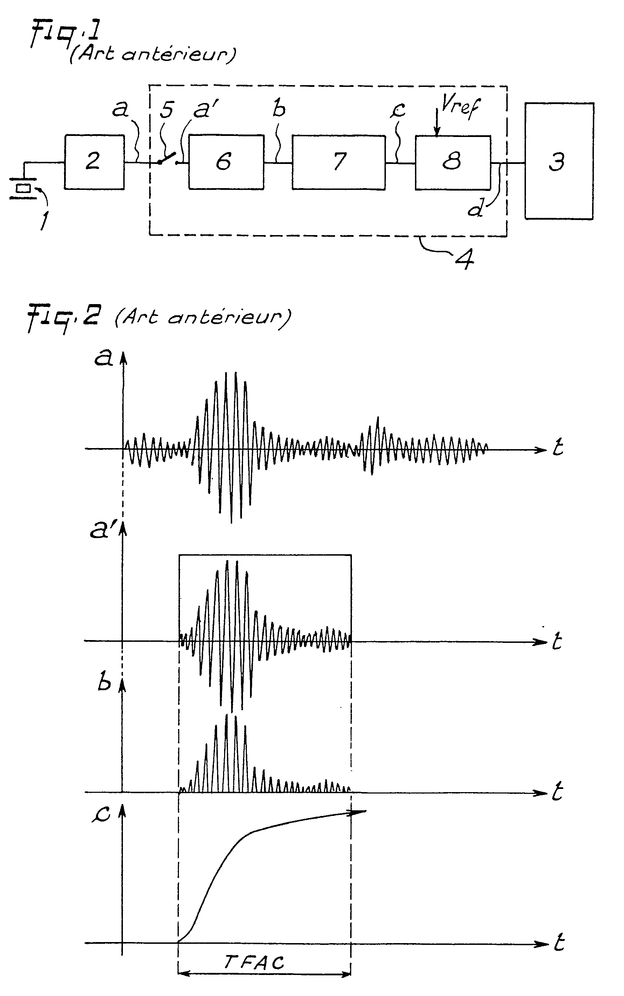

La demande de brevet EP—A—0018858 décrit une telle chaîne de traitement de type analogique représentée sous forme de schéma bloc à la figure 1 des dessins annexés. Cette chaîne de traitement est insérée entre un étage 2 d'amplification et de filtrage du signal de sortie d'un capteur accélérométrique 1 et un calculateur numérique 3 qui assure la détection proprement dite du cliquetis. La chaîne de traitement 4 comprend un interrupteur analogique 5 commandé pour appliquer le signal $a$ de sortie de l'étage 2 à un étage 6 de redressement double alternance pendant la fenêtre de mesure. Le signal $a'$ appliqué à l'entrée de l'étage 6 donne lieu à la sortie de ce dernier à un signal $b$ qui est intégré par un étage 7 produisant un signal intégré $c$. Le signal analogique intégré $c$ est converti sous une forme numérique $d$ dans un convertisseur analoguque-numérique 8 recevant une tension de référence Vref et c'est cette valeur numérique $d$ qui est lue par le calculateur 3. Les signaux $a$, $a'$, $b$ et $c$ sont représentés à la figure 2 des dessins annexés.

La fonction de transfert d'une telle chaîne de traitement analogique peut s'exprimer sous la forme:

$$X = INT\left[\frac{\frac{1}{\zeta} {_0}\!\int^{TFAC} ABS(Ve) \cdot dt}{V_{ref}} \cdot 2^N + M_o\right]$$

où:

X est le résultat converti sous forme numérique du traitement analogique du signal de sortie du capteur accélérométrique,

$\zeta$ est la constante de temps de l'intégrateur, TFAC est la durée de la fenêtre de mesure ou d'analyse,

$V_{ref}$ est la tension de référence du convertisseur analogique/numérique,

N est le nombre de bits significatifs du convertisseur et donc du résultat de la chaîne de traitement,

ABS (Ve) est la valeur absolue du signal de sortie du capteur accélérométrique 1 après mise en forme dans l'étage 2 d'amplification et de filtrage,

Mo est une constante liée à la fonction partie entière INT [].

Toutfois, la réalisation analogique discrète ou intégré d'une chaîne de traitement telle que définie ci-dessus pose de nombreux problèmes.

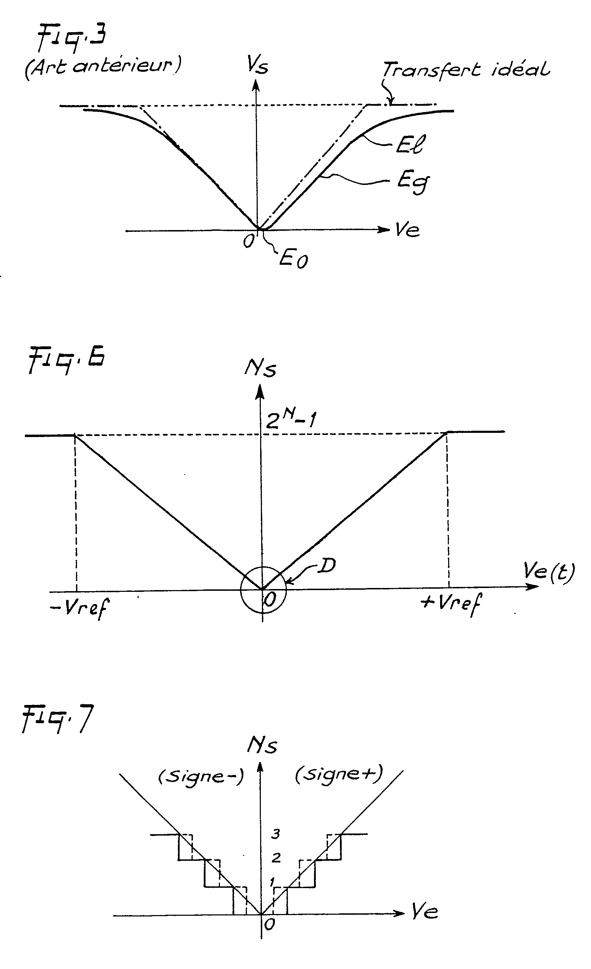

Tout d'abord, il s'avère difficile, de réaliser un redresseur double alternance ultra linéaire car, comme le montre la figure 3 des dessins annexés, l'étage de redressement introduit, par rapport à une fonction de transfert idéale représentée en traits mixtes, une erreur d'offset EO, une erreur de gain Eg et une erreur de linéarité E1 à l'approche de la saturation. De plus, la réponse transitoire du redresseur est très liée aux performances des amplificateurs opérationnels utilisés.

Une deuxième source de difficultés est liée à l'intégrateur dont la précision de la constante de temps $\zeta = RC$ est fonction de celle des composants R et C utilisés, précision qu'il est très difficile de garantir à mieux que 10%. De plus, les dérives en fonction de la température et du vieillissement de ces composants ne permettent pas d'assurer le maintien de cette précision tout au long de la durée d'utilisation. Enfin, il est nécessaire d'utiliser un système d'auto-zéro pour annuler les erreurs liées à l'intégration des tensions d'offset et des courants de polarisation des amplificateurs utilisés, ce qui complique les circuits mis en oeuvre.

Un troisième problème rencontré est celui de la détermination du temps de conversion du convertisseur analogique-numérique relativement à l'évolution de la valeur intégrée stockée dans la capacité de l'intégrateur.

Enfin, la modélisation d'une chaîne de traitement analogique classique s'avère très délicate compte-tenu du nombre de variables à agréger et à apprécier au niveau de chaque élément de la chaîne. Or il est important de réaliser une telle modélisation car l'imapct des dérives en température, dans le cadre des spécifications d'environnement climatique des équipements électroniques automobiles, est très lourd de conséquence sur la permanence de la précision de la chaîne de traitement.

L'invention vise à réaliser un procédé et une chaîne de traitement numérique du signal de sortie d'un capteur, notamment d'un capteur accélérométrique, qui permettent, entre autres de s'affranchir des problèmes évoqués ci-dessus rencontrés avec les chaînes analogiques connues. Or, les calculateurs numériques standards de l'état de la technique ne permettent pas, de par leurs caractéristiques, de satisfaire les exigences de souplesse, de précision et de rapidité du traitement du signal tout en offrant un coût qui soit compatible avec une application en grande série, comme se peut être le cas pour le traitement du signal de sortie d'un capteur de cliquetis pour moteur de véhicules automobile.

Pour résoudre ces problèmes, l'invention a pour objet un procédé de traitement du signal analogique de sortie d'un capteur, notamment d'un capteur accélérométrique de détection de cliquetis pour moteur à combustion interne, permettant d'effectuer un redressement double alternance et une intégration dudit signal pendant une période de mesure déterminée (TFAC) et de délivrer une grandeur numérique (X) représentative du signal de sortie du capteur redressé et intégré pendant la période de mesure, procédé suivant lequel on échantillonne et on convertit sous forme numérique le signal analogique (Ve(t)) pendant la période de mesure (TFAC), on mémorise temporairement une valeur numérique représentative du dernier échantillon acquis (x(i)). Suivant l'invention, on pondère chaque échantillon (x(i)) converti sous forme numérique et mémorisé temporairement en le multipliant par un coefficient (C(i)) et, pendant l'acquisition de l'échantillon suivant, on procède à l'addition de la valeur numérique pondérée x'(i) dudit échantillon avec la somme cumulée (y(i−1)) des valeurs numériques pondérées des échantillons acquis depuis le début de la période de mesure (TFAC), on répète lesdites opérations de mémorisation et d'addition pendant toute la durée de la période de mesure (TFAC) et, à la fin de celle-ci, on divise le résultat de la somme calculée (Y) des valeurs numériques pondérées x'(i) par une valeur numérique (NZ) représentative de la constante (ζ) d'intégration du signal de sortie du capteur, le quotient de ladite division représentant ladite grandeur numérique (X).

De préférence, le coefficient de pondération (C(i)) est égal à $2^{-j(i)}$, j(i) étant un nombre entier dont la valeur est fonction du rang (i) de l'échantillon considéré.

L'invention a également pour objet une chaîne de traitement numérique pour la mise en oeuvre du procédé défini ci-dessus, comprenant des moyens d'échantillonnage du signal analogique acquis, un registre à décalage, des moyens de mémorisation de la valeur numérique (NZ) de la constante d'intégration (ζ), un bloc d'addition et de soustraction conditionnée connecté au registre à décalage et aux moyens de mémorisation, des moyens de mémorisation de nombres j(i) définissant des coefficients de pondération, un accumulateur connecté à la sortie dudit bloc et un séquenceur qui commande l'échantillonnage et la conversion sous forme numérique des échantillons par lesdits moyens, de décalages à droite du contenu (x(i)) du registre à décalage en nombre égal au nombre j(i) mémorisé pour l'échantillon de rang i, le stockage de la valeur numérique (x(i), x'(i)) représentative du dernier échantillon acquis dans le registre à décalage, le fonctionnement dudit bloc en additionneur pendant la période de mesure déterminée (TFAC) pour le calcul de la somme cumulée (y(i)) et, en réponse à la détection de la fin de ladite période, le fonctionnement du bloc en soustracteur ainsi que le déroulement d'opérations de rotation du contenu de l'accumulateur pour diviser le résultat final (Y) de la somme cumulée par la valeur numérique (NZ) de la constant d'intégration (ζ).

Suivant une variante de l'invention, les moyens d'échantillonage et de conversion sous forme numérique, le registre à décalage et les moyens de mémorisation sont inteconnectés entre eux et avec une première entrée du bloc par un premier bus de liaison parallèle, l'accumulateur étant connecté à la deuxième entrée du bloc par un deuxième bus de liaison parallèle, le séquenceur commandant, à chaque acquisition d'un nouvel échantillon pendant la période de mesure (TFAC), l'addition de la valeur numérique (x(i), x'(i)) représentative de cet échantillon stockée dans le registre à décalage avec la somme cumulée (y(i−1)) contenue dans l'accumulateur et, pendant l'opération de division par soustraction conditionnée et rotation du contenu de l'accumulateur, le chargement des reports successifs (BW) produits par le bloc au cours de ladite opération de division à l'entrée de chargement série du registre à décalage qui contient ladite grandeur numérique (X) à la fin de l'opération de division.

De préférence, l'accumulateur comprend un accumulateur de poids faible connecté à la sortie du bloc et un accumulateur de poids fort bouclés entre eux par leurs entrées et sorties séries pour permettre des opérations de décalage droite et gauche sous la commande du séquenceur, le registre à décalage, les moyens de mémorisation, les accumulateurs de poids faible et fort et les bus ayant une capacité de M bits, le séquenceur étant adapté pour piloter ladite opération de division en commandant M décalages droite du contenu des accumulateurs de poids fort et poids faible puis le fonctionnement du bloc en soustracteur pour calculer la différence entre le contenu de l'accumulateur de poids faible et la valeur numérique (Nζ) de la constante d'intégration, cette différence devenant le nouveau contenu de l'accumulateur de poids faible et un report (BW) de niveau logique "1" étant chargé dans le registre à décalage si ladite différence est positive ou nulle et le contenu de l'accumulateur de poids faible demeurant inchangé et un report (BW) de niveau logique "0" étant chargé dans le registre à décalage si ladite différence est négative, cette opération de soustraction étant suivie d'un décalage gauche du contenu des accumulateurs de poids fort et poids faible et étant répétée sous la commande du séquenceur jusqu'à ce que M décalages gauche aient été effectués, ledit quotient (X) étant alors contenu dans le registre à décalage.

De préférence, le séquencer est associé à des moyens pour commander sélectivement le chargement dudit report (BW), d'un niveau logique "1" ou d'un niveau logique "0" à l'entrée de chargement série du registre à décalage, le contenu dudit registre étant initialisé à un premier niveau logique avant l'opération de division et un niveau logique opposé étant chargé à son entrée série lors du premier décalage droit et gauche du contenu des accumulateurs, le séquenceur commandant la poursuite desdits décalages droite et gauche jusqu'à la détection dudit niveau logique opposé à la sortie de lecture série du registre à décalage.

D'autres caractéristiques et avantages de l'invention ressortiront de la description qui va suivre d'un mode de sa réalisation donnée uniquement à titre d'exemple et illustré par les dessins annexés sur lesquels:

la figure 1 est un schéma-bloc d'une chaîne de traitement analogique conforme à l'état de la technique;

la figure 2 montre la forme des signaux présents en différents points de la chaîne de la figure 1;

la figure 3 est un diagramme illustrant la fonction de transfert du redresseur double alternance de la figure 1;

la figure 4 est un schéma-bloc d'une chaîne de traitement numérique du signal de sortie d'un capteur de cliquetis;

les figure 5a à 5d sont des diagrammes illustrant le processus de traitement mis en oeuvre par la chaîne de la figure 4;

les figure 6 et 7 sont des vues analogues à la figure 3 illustrant une caractéristique de transfert de la chaîne assimilable à un redressement double alternance;

la figure 8 est un diagramme illustrant un mode de fonctionnement de la chaîne assurant une modification de la constante de temps d'intégration au cours de la fenêtre de mesure;

la figure 9 est un chronogramme illustrant certaines particularités du fonctionnement de la chaîne numérique de la figure 4; et

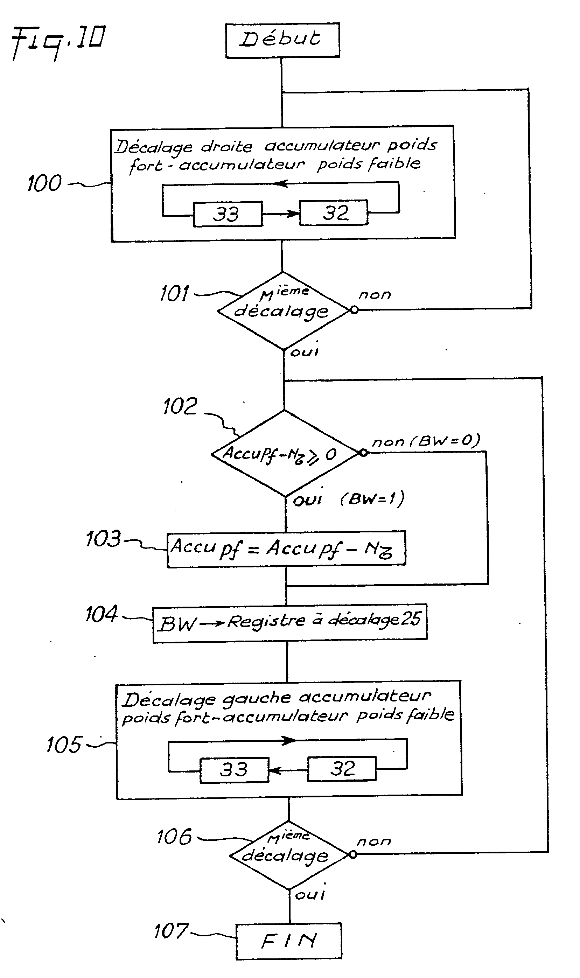

la figure 10 est un algorithme illustrant le processus final de division mis en oeuvre par la chaîne de la figure 4.

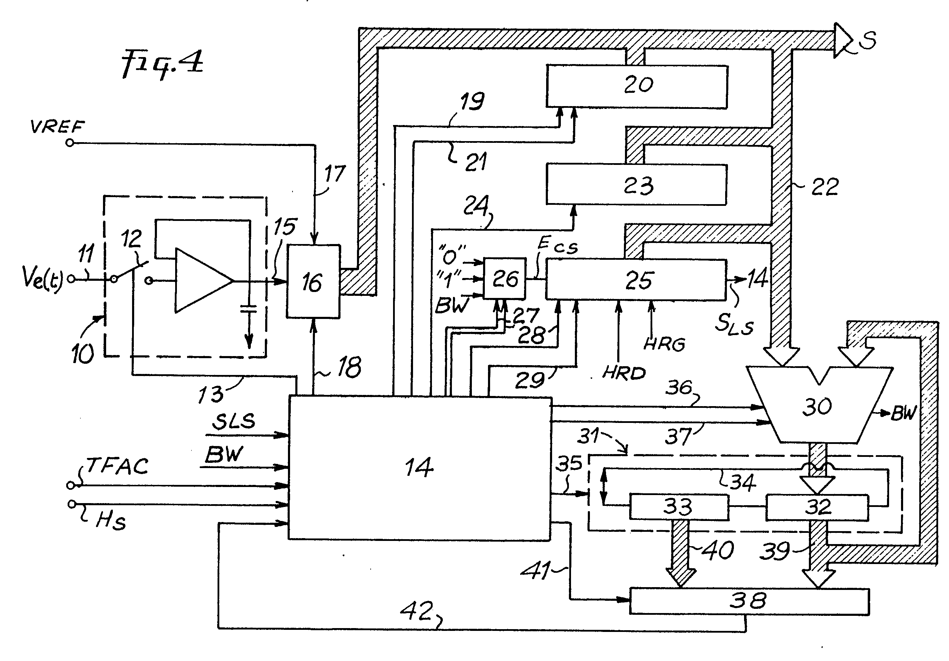

La chaîne de traitement numérique représentée à la figure 4 est destinée à être interposée entre, d'une part, un capteur accélérométrique suivi de son étage d'amplification et de filtrage et, d'autre part, un calculateur numérique, comme la chaîne de traitement analogique 4 de la figure 1.

Cette chaîne numérique comprend un échantilloneur-bloqueur 10 à l'entrée 11 duquel est appliqué le signal de sortie du capteur accélérométrique mis en forme et ci-après appelé Ve(t). L'acquisition d'échantillons du signal Ve(t) est réalisée au moyen d'un intérrupteur analogique 12 commandé par un signal 13 d'acquisition d'échantillons délivré par un séquenceur 14 dont le rôle est de délivrer la succession des signaux de commande nécessaires à chacun des blocs de la chaîne pour réaliser l'enchaînement des opérations qui seront décries dans la suite. Le séquenceur 14 peut être constitué par exemple d'un réseau logique programmable associé à un registre d'état qui ne seront pas décrits en détails, un tel agencement étant bien connu des spécialistes de la technique.

Le séquenceur 14 reçoit un signal TFAC qui définit la fenêtre angulaire à l'intérieur de laquelle le signal Ve(t) doit être pris en compte pour la détection de cliquetis. Ce signal TFAC peut être élaboré de manière désormais classique par un calculateur, par exemple d'allumage, qui peut être le calculateur 3 de la figure 1. Le séquenceur 14 reçoit également un signal d'horloge Hs délivré par le calculateur 3 ou une horloge externe (non représentée).

La sortie 15 de l'échantilloneur-bloqueur 10 est appliquée à l'entrée d'un convertisseur analogique-numérique 16 connecté en 17 à une source de tension de référence $V_{ref}$ qui définit la dynamique de codage du signal Ve(t) et en 18 au séquenceur 14 qui délivre sur sa sortie correspondante un signal d'horloge HCAN pour la commande interne du convertisseur analogique-numérique. La sortie du convertisseur analogique-numérique 16 est connectée par l'intermédiaire d'un bus 22 à M bis à un registre de résultat 20.

Chaque échantillon x(i) résultat de la conversion sous forme numérique du signal Ve(t) est chargé, sous la commande 19 du séquenceur 14, du convertisseur 16 dans le registre de résultat 20 où il est mémorisé temporairement. La lecture de l'échantillon x(i) mémorisé dans le registre 20 est commandé en 21 par le séquenceur et s'effectue sur le bus 22.

Ce dernier est également connecté à un registre 23 dans lequel est stockée une constante de normalisation ou d'intégration Nζ dont la lecture sur le bus 22 est commandée en 24 par le séquenceur 14.

La chaîne numérique comprend un troisième registre 25 servant, entre autres, à la mise à l'échelle des échantillons x(i).

Ce registre à décalage 25 est connecté au bus 22 par ses entrées parallèles de chargement et ses sorties parallèles de lecture commandées respectivement par le séquenceur 14 en 28 et 29. L'entrée série Ecs du registre 25 est connectée à un aiguilleur ou multiplexeur 26 qui permet sélectivement, sous les commandes 27 du séquenceur 14, le chargement du registre à décalage 25 avec des valeurs binaires "0", "1" ou BW comme cela sera décrit plus en détail dans la suite.

Le bus 22 de M bits est relié à une entrée d'un bloc 30 additionneur-soustracteur conditionné dont la sortie est connectée à un accumulateur 31. Plus précisément, l'accumulateur 31 comprend un accumulateur de poids faible 32 dont la sortie série attaque un accumulateur de poids fort 33. Les accumulateurs 32 et 33 sont connectés entre eux en 34 de manière à permettre des rotations "droite" ou "gauche" sous la commande repérée 35 du séquenceur 14. Le séquenceur 14 commande également en 36 le fonctionnement du bloc 30 en additionneur et en 37 son fonctionnement en soustracteur conditionné.

La sortie de l'accumulateur de poids faible 32 est d'une part rebouclée sur la deuxième entrée de l'additionneur-soustracteur conditionné 30 et d'autre part appliquée à un décodeur 38 par un bus 39. Le décodeur 38 est également connecté à l'accumulateur de poids fort 33 par un bus 40 et il peut être périodiquement réinitialisé sous la commande repérée 41 du séquenceur 14. Enfin, la sortie 42 du décodeur 38 est appliquée en entrée du séquenceur 14.

Le fonctionnement d'ensemble de la chaîne de traitement numérique sera maintenant décrit en se référant aux figures 4 à 7.

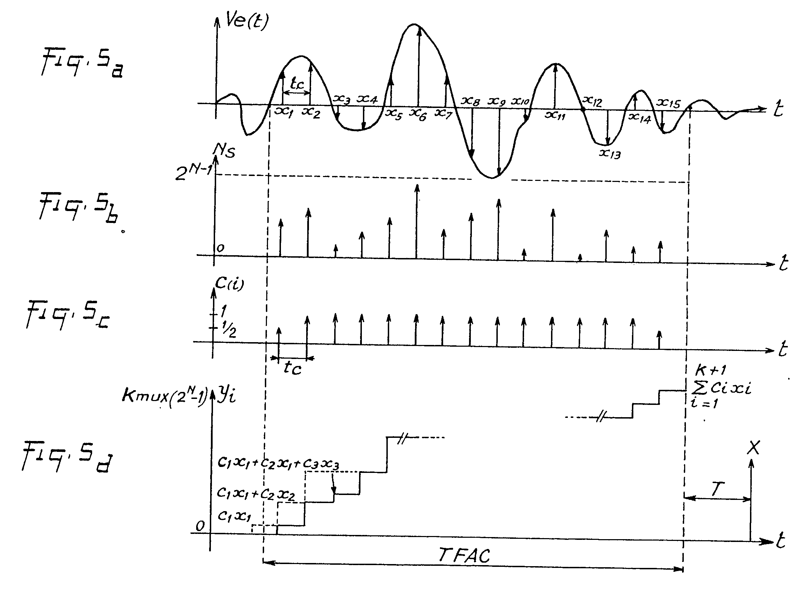

Comme le montre la figure 5a, le signal Ve(t) est échantilloné pendant la fenêtre angulaire d'analyse TFAC avec une périodicité tc et les échantillons recueillis sont désignés x1, x2,...xi. La périodicité tc est choisie de manière que la cadence d'acquisition des échantillons soit suffisamment rapide pour satisfaire les contraintes de l'ensemble du système en matière de précision.

L'étage de mémorisation constitué par l'échantilloneur-bloqueur 10 précédant le convertisseur analogique-numérique 16 permet de satisfaire les exigences d'échantillonage des composantes spectrales significatives du signal Ve(t). Bien entendu, en variante, l'échantillonneur-bloqueur peut être intégré au convertisseur analogique-numérique 16.

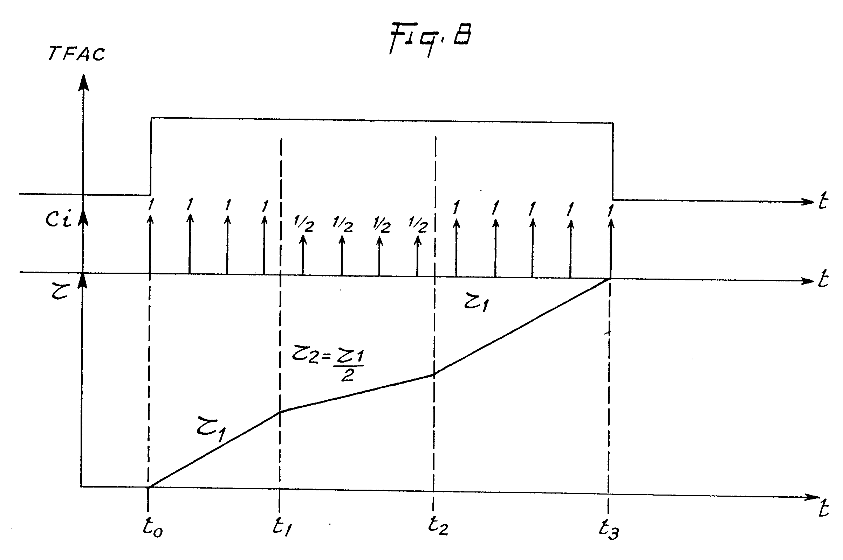

Ce dernier a une fonction de transfert bipolaire à N bis+signe qui, au phénomène de quantification près, peut représenter idéalement celle d'un redresseur double alternance ultra-linéaire. Cette fonction de transfert, représentée à la figure 6, supprime les effets néfastes de la non linéarité à l'approche de la saturation qui se traduisent, dans le cas d'un redresseur analogique, par l'erreur de linéarité E1 illustrée à la figure 3. En effet, dans le cas présent, la fonction de transfert peut être mathématiquement explicitée et parfaitement définie et, si ABS $(Ve) \geqq V_{ref}$, le code en sortie du convertisseur 16 est: $Ns = 2^{N-1}$.

Par ailleurs, comme le montre la figure 7 qui est une vue à plus grande échalle du détail D de la figure 6, la caractéristique du convertisseur 16 peut être modifiée par le moyen classique d'addition d'une tension de décalage (fonction initiale échelons en traits plein; fonction avec tension de décalage en traits interrompus), qui permet d'obtenir une fonction d'erreur de quantification symétrique.

L'erreur de décalage propre au convertisseur au voisinage du zéro peut être supprimée par le moyen classique d'auto-test ou d'auto-zéro bien connu des spécialistes de la technique.

Le nombre N de bits effectifs du convertisseur 16 est choisi en fonction des caractéristiques du signal Ve(t) et des exigences de précision du système de manière à obtenir le rapport signal sur bruit en entrée souhaité.

Le résultat numérique directement accessible en sortie du convertisseur 16 s'explicite donc comme suit:

$$x(i) = INT[\frac{ABS\ (Ve(t=i \cdot tc))}{V_{ref}} \cdot 2^N + N_0] \cdot \delta TFAC,$$

pour ABS $(Ve(t)) < V_{ref}$,

formule dans laquelle:

x(i) est la valeur numérique de l'échantillon d'indice i représentatif de la valeur absolue de la tension;

INT[] représente la fonction "partie entière";

ABS $(Ve(t=i \cdot tc))$ est la valeur absolue de la tension du signal Ve(t) mémorisé par l'échantilloneur-bloqueur 10;

tc est la période d'échantillonnage;

$V_{ref}$ est la tension de référence appliquée au convertisseur 16;

$N_0$ est une constante de centrage de l'erreur de quantification qui prend généralement la valeur 0 ou 0,5;

$\delta TAFC = 1$ durant la fenêtre d'analyse.

$\delta TAFC = 0$ en dehors de la fenêtre d'analyse.

Les différents échantillons x(i) recueillis et convertis sous forme numérique se traduisent donc à la sortie du convertisseur 16 par un code Ns qui peut prendre au maximum la valeur $2^{N-1}$, comme représenté à la figure 5b.

A la fin de chaque période d'échantillonage tc, l'échantillon x(i) est chargé dans le registre de résultat 20. Avant l'arrivée de l'échantillon suivant x(i+1), le contenu x(i) du registre de résultat 20 est transféré dans le registre à décalage 25, sous la commande du séquenceur 14, pour sa mise à l'échelle. A cet effet, chaque échantillon x(i) est multiplié par un coefficient de pondération Ci tel que $C(i) = 2^{-j(i)}$, j(i) étant un nombre entier tel que $j(i) \epsilon [0, N]$, de sorte que chaque échantillon pondéré ou mis à l'échelle x'(i) a pour valeur:

$$x'(i) = x(i) \cdot C(i) = x(i) \cdot 2^{-j(i)}$$

La figure 5c illustre les valeurs que peuvent prendre les coefficients de pondération $C(i)$: dans cet exemple $C(i) = 0,5$ pour le premier et le dernier échantillon et $C(i) = 1$ pour tous les autres échantillons. Cependant, les coefficients $C(i)$ peuvent prendre d'autres valeurs et être répartis différemment comme cela sera expliqué plus en détail dans la suite.

La mise à l'échelle des échantillons $x(i)$ stockés dans le registre à décalage 25 est assurée en effectuant un nombre de décalages à droit du contenu du registre 25 égal à $j(i)$. Les nombres $j(i)$ peuvent être mémorisés dans le séquencer 14 ou dans une mémoire permanente (ROM) extérieure (non représentée) si nécessaire.

Chaque échantillon pondéré $x'(i)$ est ensuite appliqué sous la commande du séquenceur 14 en entrée du bloc 30 qui, pendant la durée de la fenêtre d'analyse TFAC, est conditionné en 36 par le séquenceur 14 pour fonctionner en additionneur. La valeur de l'échantillon pondéré $x'(i)$ est alors sommée avec le contenu existant de l'accumulateur 31, appliqué à l'autre entrée de l'additionneur 30 par le bus 39, et le résultat de cette addition est à nouveau stocké dans l'accumulateur 31 si bien que l'évolution du contenu de ce dernier se traduit par:

$$y(i) = y(i-1) + x'(i) = C_1 x_1 + C_2 x_2 + \ldots C(i) \, x(i),$$

$y(i)$ représentant le résultat de l'accumulation dont l'évolution au cours de la fenêtre d'analyse TFAC est représentée à la figure 5d. A la fin de la fenêtre d'analyse TFAC, la chaîne de traitement procède à l'intégration ou mise à l'échelle du résultat de l'accumulation:

$$X = INT\left[\frac{\sum\limits_{i=1}^{K+1} x(i) \, 2^{-j(i)}}{N\zeta} + M_0\right],$$

où:

$K = INT[TFAC/tc]$, $K+1$ représentant le nombre maximal d'échantillons traités durant la fenêtre d'analyse TFAC;

tc est la période d'échantillonage;

TFAC est la durée de la fenêtre d'analyse;

$N\zeta$ est la valeur numérique de la constante d'intégration ou d'analyse $\zeta$ stockée dans le registre 23, valeur qui peut être comprise entre 1 et la capacité maximale du registre 23 compatible avec la capacité de l'accumulateur 31;

$M_0$ est une constante pouvant prendre classiquement les valeurs 0—0,5 ou 1 et permettant de modifier la fonction partie entière $INT[\,]$;

$X$ est le résultat numérique du traitement du signal fourni en sortie de la chaîne, au bout d'un temps $T$ nécessaire à l'opération de division après la fin de la fenêtre d'analyse TFAC (voir figure 5d).

Cette opération d'intégration ou de mise à l'échelle du résultat de l'accumulation est réalisée au moyen du bloc 30 commandé en 37 par le séquenceur 14 pour fonctionner en soustracteur conditionné, l'accumulateur 31 grâce aux facilités de rotation droite-gauche de ce dernier et du registre à décalage 25 qui, à la fin de l'opération, contient le résultat $X$ du traitement numérique du signal $Ve(t)$.

La mise en oeuvre de cette opération sera décrite plus en détails dans la suite, mais on peut dors et déjà remarquer que la précision de l'intégration et du résultat numérique $X$ obtenu en sortie de la chaîne de traitement ne dépend que de la précision du convertisseur analogique-numérique 16, de la précision et de la valeur intrinsèque de la période d'échantillonnage tc, ainsi que de la capacité maximale numérique de l'accumulateur 31.

Par ailleurs, la facilité de mise à l'échelle des échantillons—$x'(i) = x(i) \, 2^{-j(i)}$—peut être utilisée, notamment, pour la prise en compte de valeurs d'échantillons particulières (par exemple la valeur initiale et la valeur finale comme représenté à la figure 5c) ou pour la modification de la constante de temps $\zeta$ de l'intégrateur pendant la fenêtre d'analyse TFAC. Un exemple de cette deuxième possibilité est illustré par la figure 8 sur laquelle:

entre le début de la fenêtre d'analyse to et l'instant t1 la constante d'intégration $\zeta$ a une première valeur $\zeta_1$ car $C(i) = 1$, soit $j(i) = 0$;

entre les instants t1 et t2, la constante d'intégration a une deuxième valeur $\zeta_2 = \zeta_1/2$ car $C(i) = \frac{1}{2}$ c'est-à-dire que $j(i) = 1$;

entre l'instant t2 et la fin t3 de la fenêtre d'analyse la constante d'intégration $\zeta$ a de nouveau la valeur $\zeta_1$ du fait que $C(i) = 1$ soit $j(i) = 0$.

Ceci permet la réalisation aisée de fonctions "porte d'analyse" plus complexes, et notamment trapézoïdales, permettant d'atténuer certaines composantes spectrales du signal $Ve(t)$.

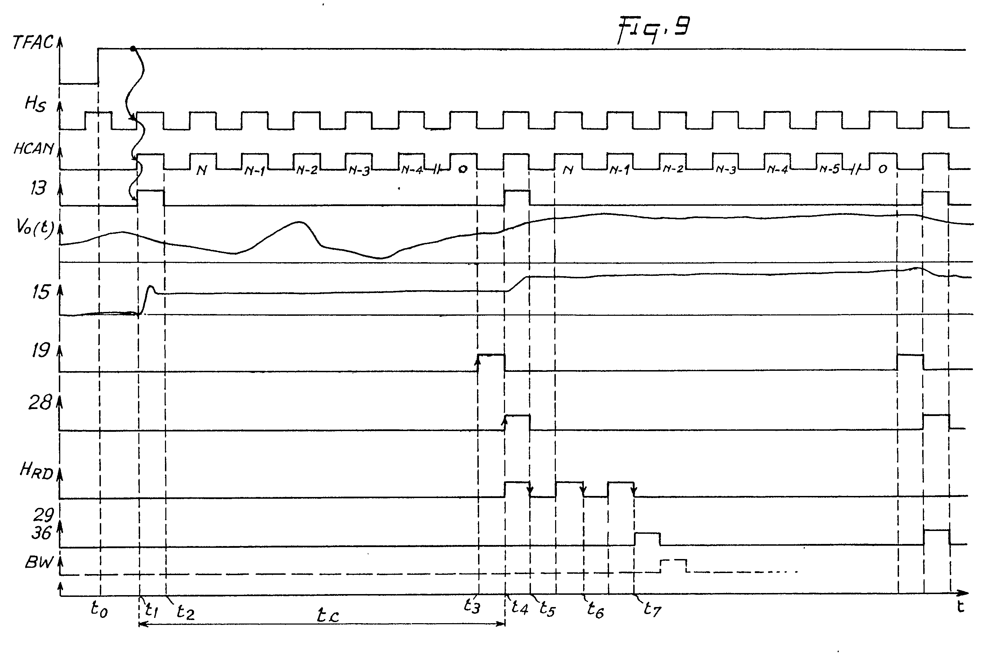

Certains aspects particuliers du fonctionnement de la chaîne de traitement numérique suivant l'invention seront maintenant décrits plus en détails en se référant notamment aux figures 4 et 9.

La fenêtre d'analyse angulaire commence à l'instant to où le signal TFAC passe de "0" à "1". Dès que la fenêtre d'analyse est "ouverte", le séquenceur transmet le signal d'horloge Hs au convertisseur analogique-numérique 16 sur la connexion 18 où ce signal est appelé HCAN. La première impulsion du signal d'horloge Hs est également appliquée en 13, à l'instant t1, à l'échantillonneur-bloqueur 10 pour acquérir le premier échantillon du signal $Ve(t)$. L'échantillon acquis pendant la fermeture de l'interrupteur analogique 12 par le signal 13, entre les instants t1 et t2, est mémorisé par l'échantillonneur-bloqueur 10 dont la sortie 15 évolue comme représenté à la figure 9. Cet échantillon est alors converti sous forme numérique dans le convertisseur 16 à l'aide du signal d'horloge HCAN entre les instants t2 et t3: lorsque N+1 impulsions ont été compatabilisées (N bits de quantification+1 bit de signe), le séquenceur 14 émet en 19 un signal commandant la chargement du code de sortie du convertisseur 16, représentatif de la valeur numérique x1 du premier échantillon, dans le registre de résultat 20. Simultanément, la valeur j(i) (j1 dans le cas du premier échantillon) est chargée dans le séquenceur 14 pour commander le nombre de décalages à droite de x1 qui seront effectués dans le registre à décalage 25.

A l'instant t4 d'apparition d'une nouvelle impulsion du signal d'horloge Hs, le séquenceur 14 émet en 28 une impulsion dont le front montant commande le chargement du contenu x1 du registre de résultat 20 dans le registre à décalage 25 et génère en 13 un nouveau signal d'acquisition d'échantillon. Par ailleurs, si la valeur j(i) chargée à l'instant t3 n'est pas nulle, le séquenceur 14 engendre également à l'instant t4 la première d'une série d'impulsion d'horloge de rotation droite $H_{RD}$ dont le nombre est egal à j(i): chacune de ces impulsions d'horloge $H_{RD}$ commande sur son front descendant, c'est-à-dire aux instants t5, t6 et t7 respectivement, un décalage "droite" du contenu du registre à décalage 25. A la fin t7 de cette opération de décalage, le nombre présent dans le registre à décalage 25 représente donc la valeur numérique pondérée $x'(i) = x(i) \cdot 2^{-j(i)}$ de l'échantillon.

Le séquenceur 14 génère alors en 29 et 36 une impulsion pour commander la lecture du contenu $x(i) \cdot 2^{-j(i)}$ du registre à décalage 25 et sa sommation avec le contenu préexistant de l'accumulateur de poids faible 32. Si cette somme est supérieure ou égale à $2^N$, c'est-à-dire si:

Contenu accumulateur de poids faible $+ x'(i) \geqq 2^N$, le report BW de l'additionneur 30 passe à "1" comme représenté en traits interrompus à la figure 9 et l'accumulateur de poids fort 33 est incrémenté d'une unité:

Accumulateur poids fort = Accumulateur poids fort + 1.

A la fin de cette opération, dans le cas du $i^{\text{éme}}$ échantillon, le contenu global de l'accumulateur 31, constitué de l'accumulateur de poids faible 32 et de l'accumulateur de poids fort 33, est donc comme indiqué précédemment:

$$y(i) = y(i-1) + x'(i) = y(i-1) + x(i) \cdot 2^{-j(i)}$$

Ce processus se reproduit à chaque acquisition d'échantillon pendant toute la durée de la fenêtre d'analyse TFAC sauf si le décodeur 38, qui a été initialisé au début de celle-ci, émet prématurément un signal de débordement sur la sortie OVF notée 42 à la figure 4. Le décodeur 38 a 2M entrées reliées respectivement par les bus 39 et 40 de M bits chacuns aux accumulateurs de poids faible 32 et de poids fort 33. La sortie OVF 42 passe à "1" si:

$$y(i) \geqq (2^M - 1) \cdot N_\zeta$$

Dans ce cas, l'accumulation des échantillons pondérés x'(i) est interrompue par le séquenceur 14 et le résultat anticipé du traitement numérique du signal Ve(t) est directement disponible:

$$X = 2^M - 1$$

Dans l'hypothèse où le processus d'accumulation se poursuit jusqu'à la fin de la fenêtre d'analyse TFAC comme représenté à la figure 5d, le contenu final de l'accumulateur 31 est:

$$Y = \sum_{i=1}^{K+1} C(i)\, x(i)$$

Le séquenceur 14 déclenche alors l'opération de division pour mettre à l'échelle le résultat de l'accumulation. Cette opération de division est effectué à l'aide du registre à décalage 25, du bloc 30 et de l'accumulateur 31, et se déroule conformément à l'algorithme de la figure 11, sous le pilotage du séquenceur 14.

Le séquenceur 14 commande tout d'abord à l'étape 100 un décalage "droite" du contenu des accumulateurs de poids fort et poids faible 32 et 33, les deux accumulateurs étant bouclés comme indiqué à cette étape.

L'étape suivante 101 est un test pour déterminer si l'on a effectué M décalages du contenu des accumulateurs 32 et 33:

dans la négative, on revient à l'étape 100 et l'on effectue un nouveau décalage "droite";

dans l'affirmative, M décalages "droite" du contenu des accumulateurs ont été effectués et on passe à l'étape suivante 102.

Le comptage des M décalages du test 101 est effectué par le registre à décalage 25: a cet effet, le contenu de celui-ci est préalablement mis à zéro par le séquenceur 14 à travers le multiplexeur 26 et, au premier décalage droite de l'étape 100, un "1" est émis par l'intermédiaire du multiplexeur 26 à l'entrée de chargement série Ecs du bit de poids faible du registre 25. A chaque décalage "droite" du contenu des accumulateurs 32, 33, le séquenceur 14 commande la rotation à gauche du registre à décalage par l'entrée d'horloge de rotation "gauche" $H_{RG}$ du registre 25. La sortie $S_{LS}$ de lecture série du bit de poids fort du registre 25 est lue par le séquenceur 14 et, tant que cette sortie est à "0", le séquenceur 14 continue le décalage "droite" des accumulateurs 32 et 33 et le décalage "gauche" du registre 25. Quand le séquenceur 14 détecte un "1" à la sortie $S_{LS}$, c'est que M décalages "droite" des accumulateurs 32, 33 et M décalages "gauche" du registre 25 ont été effectués puisque la capacité du registre à décalage 25 est de M bits.

On passe alors à l'étape 102 qui est un test où l'on examine si:

Contenu de l'accumulateur de poids faible $- N_\zeta \geqq 0$.

Cette opération est effectuée par le bloc 30 fonctionnant en soustracteur conditionné sous la commande qui lui est appliquée en 37 par le séquenceur 14, $N_\zeta$ étant lu dans le registre 23 par la commande 24. Le résultat de cette inégalité est donné par le niveau logique du report BW. La réponse au test 102 est positive si BW = "1" et négative si BW = "0".

Dans l'affirmative, si BW="1", on passe à l'étape 103 où l'on réactualise le contenu de l'accumulateur de poid faible 32 en prenant comme nouveau contenu de celui-ci son contenu préexistant diminué de $N_\zeta$, soit:

Accumulateur poids faible=Accumulateur poids faible$-N_\zeta$

Accumulateur poids fort inchangé.

On passe ensuite à l'étape 104 où l'on charge BW, dans ce cas égal à "1", à l'entrée de chargement série Ecs du registre à décalage 25.

Si la réponse au test 102 est négative, on passe directement à l'étape 104 où la valeur de BW chargée à l'entrée Ecs du registre 25 est "0".

Le chargement de BW à l'entrée Ecs du registre 25 est effectué par l'intermédiaire du multiplexeur 26 sous la commande du séquenceur 14.

L'étape suivante 105 consiste en un décalage "gauche" du contenu des accumulateurs de poids fort et poids faible 33, 32, conformément au bouclage représenté à cette étape.

Un test 106 est ensuite effectué sur le nombre de décalages "gauche" de l'étape 105 qui ont en lieu:

si ce nombre est inférieur à M, on reboucle sur le test 102;

si M décalages "gauche" ont été opérés, l'algorithme de division est terminé et on passe à l'étape 107 qui marque la fin de celui-ci.

Le comptage des M décalages "gauche" du test 106 est assuré, comme celui des M décalages "droite" de l'étape 101, par le registre à décalage 25. A la fin de l'étape 101, le registre 25 ne contient que des "0" et un "1" est chargé à son entrée Ecs. Le "1" est ensuite décalé à chaque fois qu'un report BW est chargé à l'entrée Ecs et, lorsque ce "1" est lu à la sortie $S_{LS}$ par le séquenceur 14, c'est que M décalages "gauche" du contenu des accumulateurs ont été effectués.

Le quotient de la division, c'est-à-dire

$$X=INT[\frac{Y}{N_\zeta}]$$

est alors contenu dans le registre à décalage 25 qui a été chargé M fois à son entrée Ecs avec la valeur logique de BW déterminée par le test 102.

En d'autres termes, à la fin de l'opération de division le résultat X représentant la valeur numérique intégrée du signal Ve(t) redressé pendant la fenêtre d'analyse TFAC est directement disponible sur les sorties du registre à décalage 25 pour tout calculateur numérique programmé selon un algorithme de détection de cliquetis.

La nécessité de génération au mieux de l'arrondi de X peut conduire à une ultime comparaison du reste contenu dans l'accumulateur poids faible avec $N_\zeta$, constante d'intégration, afin d'obtenir pour quotient de la division:

$$X=INT[\frac{Y}{N\zeta}+Mo]$$

Où Mo est une constante d'adaption.

Il résulte de ce qui précède que la chaîne décrite permet de traiter le signal de sortie d'un capteur en n'effectuant que des opérations simples, qui ne nécessitent qu'un faible nombre de composants peu coûteux. En particulier, le processus de traitement suivant l'invention n'exige pas d'effectuer l'opération de division en temps réel ce qui, dans l'état actuel de la technique, s'avérerait très difficile à réaliser avec des composants bon marchés et, par conséquent, ayant une faible puissance de calcul. En effet, l'obtention de la précision souhaitée pour le traitement numérique d'un signal de cliquetis requiert une cadence relativement élevée de prélèvement des échantillons de l'ordre de, par exemple, 100 Khz, soit une période d'échantillonage tc de 10 µs. L'obtention de cette précision est compatible avec un codage du résultat sur 8 bits, mais les microcalculateurs standards à 8 bits actuellement disponibles n'offrent pas de possibilités de conversion analogique-numérique intégré à une cadence d'acquisition des échantillons aussi élevée. Il est à noter que les techniques connues à ce jour de conversion analogique-numérique sont à même de résoudre largement le problème posé par la cadence d'échantillonnage et que l'homme de l'art peut disposer sur la même pastille de semiconducteur l'ensemble des composants qui réalisent la chaîne de traitement numérique décrite, à un coût compatible avec une application en grande série.

Bien entendu, l'invention n'est pas limitée au seul mode de réalisation décrit et de nombreuses modifications peuvent y être apportées sans sortir de son cadre.

C'est ainsi, par exemple, que le registre de résultat 20 n'est pas indispensable dans toutes les applications envisagées: sa présence est nécessaire si la lecture de la sortie du convertisseur 16 n'est pas synchronisée avec l'horloge HCAN de ce dernier comme dans l'exemple décrit, mais a lieu dès que le résultat de la conversion est disponible en sortie du convertisseur. La valeur de x(i) est alors sauvegardée dans le registre 20 en attendant la commande synchrone qui le transférera dans le registre à décalage 25 pour sa mise à l'échelle éventuelle.

Si le registre de résultat 20 est supprimé, le registre à approximations successives constituant la sortie du convertisseur analogique-numérique 16 est connecté directement au registre à décalage 25 par le bus 22. La valeur numérique de x(i) est alors transférée directement du convertisseur 16 au registre 25, par exemple à l'instant t3 au lieu de l'instant t4, les autres signaux de la figure 9 pouvant demeurer inchangés, à l'exception de la commande 19 qui est naturellement supprimée.

## Revendications

1. Procédé de traitement du signal analogique de sortie d'un capteur, notamment d'un capteur accélérométrique de détection de cliquetis pour moteur à combustion interne, permettant d'effectuer un redressement double alternance et une intégration dudit signal pendant une période de mesure déterminée (TFAC) et de délivrer une grandeur numérique (X) représentative du signal de sortie du capteur redressé et intégré pendant la période de mesure, procédé suivant lequel on échantillonne et on convertit sous forme numérique le signal analogique (Ve(t)) pendant la période de mesure (TFAC), on mémorise temporairement une valeur numérique représentative du dernier échantillon acquis (x(i)), caractérisé en ce qu'on pondère chaque échantillon (x(i)) converti sous forme numérique et mémorisé temporairement en le multipliant par un coefficient (C(i)) et, pendant l'acquisition de l'échantillon suivant, on procède à l'addition de la valeur numérique pondérée (x'(i)) dudit échantillon avec la somme cumulée (y(i−1)) des valeurs numériques pondérées des échantillons acquis depuis le début de la période de mesure (TFAC), on répète lesdites opérations de mémorisation et d'addition pendant toute la durée de la période de mesure (TFAC) et, à la fin de celle-ci, on divise le résultat de la somme cumulée (Y) des valeurs numériques pondérées x'(i) par une valeur numérique ($N_\zeta$) représentant la constante d'intégration du signal de sortie du capteur, le quotient de ladite division représentant ladite grandeur numérique (X).

2. Procédé suivant la revendication 1, caractérisé en ce que le coefficient de pondération (C(i)) est égal à $2^{-j(i)}$, j(i) étant un nombre entier dont la valeur est fonction du rang (i) de l'échantillon considéré.

3. Chaîne de traitement numérique pour la mise en oeuvre du procédé suivant l'une quelconque des revendications 1 et 2, comprenant des moyens (10, 16) d'échantillonnage du signal analogique et de conversion sous forme numérique des échantillons acquis, caractérisée en ce qu'elle comprend un registre à décalage (25), des moyens (23) de mémorisation de la valeur numérique ($N_\zeta$) de la constante d'intégration ($\zeta$), un bloc (30) d'addition et de soustraction conditionnée connecté au registre à décalage (25) et aux moyens de mémorisation (23), des moyens de mémorisation (14) de nombres j(i) définissant des coefficients de pondération, un accumulateur (31) connecté à la sortie dudit bloc (30) et un séquenceur (14) qui commande l'échantillonnage et la conversion sous forme numérique des échantillons par lesdits moyens (10, 16), un des décalages à droite du contenu (x(i)) du registre à décalage (25) en nombre égal au nombre j(i) mémorisé pour l'échantillon de rang i, le stockage de la valeur numérique pondérée x'(i) représentative du dernier échantillon acquis (x(i)) dans le registre à décalage (25), le fonctionnement dudit bloc (30) en additionneur pendant la période du mesure déterminée (TFAC) pour le calcul de la somme cumulée

$$(y(i)=y(i-1)+x'(i))$$

et, en réponse à la détection de la fin de ladite période, le fonctionnement du bloc (30) en soustracteur ainsi que le déroulement d'opérations de rotation du contenu de l'accumulateur (31) pour diviser le résultat final (Y) de la somme cumulée par la valeur numérique ($N_\zeta$) de la constante d'intégration ($\zeta$).

4. Chaîne suivant la revendication 3, caractérisée en ce que les moyens (10, 16) d'échantillonnage et de conversion sous forme numérique, le registre à décalage (25) et les moyens de mémorisation (23) sont interconnectés entre eux et avec une première entrée du bloc (30) par un premier bus (22) de liaison parallèle, l'accumulateur (31) étant connecté à la deuxième entrée du bloc (30) par un deuxième bus (39) de liaison parallèle, le séquenceur (14) commandant, à chaque acquisition d'un nouvel échantillon pendant la période de mesure (TFAC), l'addition de la valeur numérique pondérée (x'(i)) représentative de cet échantillon stockée dans le registre à décalage (25) avec la somme cumulée (y(i−1)) contenue dans l'accumulateur (31) et, pendant l'opération de division par soustraction conditionnée et rotation du contenu de l'accumulateur (31), le chargement des reports successifs (BW) produits par le bloc (30) au cours de ladite opération de division à l'entrée de chargement série (Ecs) du registre à décalage (25) qui contient ladite grandeur numérique (X) à la fin de l'opération de division.

5. Chaîne suivant la revendication 4, caractérisé en ce que l'accumulateur (31) comprend un accumulateur de poids faible (32) connecté à la sortie du bloc (30) et un accumulateur de poids fort (33) bouclés entre eux par leurs entrées et sorties séries pour permettre des opérations de décalage droite et gauche sous la commande du séquenceur (14), le registre à décalage (25), les moyens de mémorisation (23), les accumulateurs de poids faible (32) et fort (33) et les bus (22, 39) ayant une capacité de M bits, le séquenceur étant adapté pour piloter ladite opération de division en commandant M décalages droite du contenu des accumulateurs de poids fort (33) et poids faible (32) puis le fonctionnement du bloc (30) en soustracteur pour calculer la différence entre le contenu de l'accumulateur de poids faible (32) et la valeur numérique ($N_\zeta$) de la constante d'intégration, cette différence devenant le nouveau contenu de l'accumulateur de poids faible (32) et un report (BW) de niveau logique "1" étant chargé dans le registre à décalage (25) si ladite différence est positive ou nulle et le contenu de l'accumulateur de poids faible (32) demeurant inchangé et un report (BW) de niveau logique "0" étant chargé dans le registre à décalage (25) si ladite différence est négative, cette opération de soustraction étant suivie d'un décalage gauche du contenu des accumulateurs de poids fort (33) et poids faible (32) et étant répétée sous la commande du séquenceur (14) jusqu'à ce que M décalages gauche aient été effectués, ledit quotient (X) étant alors contenu dans le registre à décalage (25).

6. Chaîne suivant la revendication 5, caractérisée en ce que le séquenceur (14) est associé à des moyens (26) pour commander sélectivement le chargement dudit report (BW), d'un niveau logique "1" ou d'un niveau logique "0" à l'entrée de chargement série du registre à décalage (25), le contenu dudit registre étant initialisé à un premier niveau logique avant l'opération de division et un niveau logique opposé étant chargé à son entrée série (Ecs) lors du premier décalage droite et gauche du contenu des accumulateurs (32, 33), le séquenceur commandant lesdits décalages droite et gauche jusqu'à la détection dudit niveau logique opposé à la sortie de lecture série du registre à décalage (25).

7. Chaîne suivant l'une quelconque des revendications 3 à 6, caractérisée en ce que les moyens (10, 16) d'échantillonnage et de conversion comprennent un échantillonneur-bloqueur (10) et un convertisseur analogique-numérique (16) présentant en sortie, à chaque fin d'une conversion, une valeur numérique égale à:

$$x(i) = INT[\frac{ABS\ Ve(t=i.tc)}{Vref} \cdot 2^N + N_0],$$

où

—INT [ ] représente la fonction "partie entière";

—ABS (V (t=i.tc)) est la valeur absolue de l'échantillon de rang i du signal Ve (t), mémorisé par l'échantillonneur-bloqueur (10);

—V ref est une tension de référence appliquée au convertisseur;

—N est le nombre de bits de quantification du convertisseur;

—$N_0$ est une constant de centrage de l'erreur de quantification du convertisseur;

—tc est la période d'échantillonnage.

8. Chaîne de traitement suivant la revendication 7, caractérisée en ce que ladite grandeur (X) résultant de la division est égale à:

$$X = INT[\frac{Y}{N_\zeta} + M_0],$$

où:

—INT [ ] représente la fonction "partie entière";

—Y est le résultat de la somme cumulée contenu dans l'accumulateur (31) à la fin de la période de mesure;

—$N_\zeta$ est la valeur numérique de la constante d'intégration;

—$M_0$ est une constante permettant d'adapter la fonction "partie entière".

9. Chaîne suivant la revendication 3, caractérisée en ce quelle comprend un registre de résultat (20) et en ce que le séquenceur (14) commande séquentiellement le stockage dans le registre de résultat (20) de la valeur numérique (x(i)) du dernier échantillon acquis disponible à la sortie des moyens d'échantillonnage et de conversion (10, 16) et le transfert du contenu du registre de résultat (20) dans le registre à décalage (25) pour l'opération de pondération par décalage à droite.

10. Chaîne suivant l'une quelconque des revendications 3 à 8, caractérisée en ce qu'elle comprend un décodeur (38) connecté à la sortie de l'accumulateur (31) et réinitialisé par la séquenceur (14) à chaque début d'une période de mesure déterminée (TFAC), le décodeur (38) étant adapté pour émettre un signal de débordement (42) si le contenu (y(i)) de l'accumulateur (31) devient supérieur ou égal à une valeur prédéterminée pendant la période de mesure (TFAC).

11. Chaîne suivant la revendication 10 lorsqu'elle dépend de la revendication 5, caractérisée en ce que ladite valeur prédéterminée est égale à $N_\zeta \cdot (2^M - 1)$, $2^M - 1$ étant le quotient anticipé de ladite division (X) en cas de débordement.

**Patentansprüche**

1. Verfahren zur Verarbeitung eines analogen Ausgangssignals eines Sensors, insbesondere eines Beschleunigungssensors zum Feststellen des Klopfens einer Brennkraftmaschine, das dazu dient, eine Doppelweg-Gleichrichtung und Integration dieses Signales während einer vorgegebenen Meßperiode (TFAC) durchzuführen und eine numerische Größe (X) abzugeben, die dem während der Meßperiode gleichgerichteten und integrierten Ausgangssignal des Sensors entspricht, bei welchem Verfahren das analoge Signal (Ve(t)) während der Meßperiode (TFAC) gesampelt und in Digitalform gewandelt und kurzzeitig ein numerischer Wert gespeichert wird, der dem letzten erhaltenen Sampling-Meßsignal (x(i)) entspricht, dadurch gekennzeichnet, daß jedes in Digitalform gewandelte und kurzzeitig gespeicherte Sampling-Meßsignal (x(i)) dadurch gewichtet.wird, daß es mit einem Koeffizienten (C(i)) multipliziert und während des Empfangs des darauffolgenden Sampling-Meßsignales zu dem gewichteten numerischen Wert (x'(i)) dieses Sampling-Meßsignales die seit Beginn der Meßperiode (TFAC) aufgelaufene Summe (y(i−1)) der gewichteten numerischen Werte der Sampling-Meßsignale addiert wird, daß diese Speicher- und Additionsvorgänge während der gesamten Dauer der Meßperiode (TFAC) wiederholt werden und am Ende der Meßperiode das Ergebnis der aufgelaufenen Summe (Y) der gewichteten numerischen Werte (x'(i)) durch einen numerischen Wert (NΖ) dividiert wird, der die Integrationskonstante des Ausgangssignals des Sensors darstellt, wobei der Quotient dieser Division die besagte numerische Größe (X) bildet.

2. Verfahren nach Anspruch 1, dadurch gekennzeichnet, daß der Gewichtungs-Koeffizient (C(i)), gleich $2^{-j(i)}$ ist, wobei j(i) eine ganze Zahl ist, deren Wert eine Funktion des Ranges (i) des betrachteten Sampling-Meßsignales ist.

3. Digitale Verarbeitungskette zum Durchführen des Verfahrens nach Anspruch 1 oder 2, mit einer Einrichtung (10, 16) für das Sampling des analogen Signals und zum Umwandeln der empfangenen Sampling-Meßsignale in Digitalform, gekennzeichnet durch ein Schieberegister (25), eine Speichereinrichtung (23) zum Speichern des numerischen Wertes (Nζ) der Integrationskonstanten (ζ), einen "konditionierten "Additions- und Subtraktionsblock (30), der mit dem Schieberegister (25) und der Speichereinrichtung (23) verbunden ist, eine Speichereinrichtung (14) zum Speichern der Zahlen j(i), die die Gewichtungskoeffizienten bilden, einen Akkumulator (31), der an dem Ausgang des Additions- und Subtraktionsblockes (30) angeschlossen ist, und ein Ablaufschaltwerk (14) zum Steuern der folgenden Vorgänge: Sampling und Wandlung der Sampling-Meßsignale in Digitalform durch die besagte Einrichtung (10, 16), Rechtsverschiebung des Inhaltes (x(i)) des Schieberegisters (25) entsprechend der Zahl j(i), die für das Sampling-Meßsignal des Ranges i gespeichert ist, der Speicherung des gewichteten numerischen Wertes (x'(i)), der dem im Schieberegister (25) zuletzt empfangenen Meßsignals (x(i)) entspricht, Funktionsweise des Blockes (30) als Additionsstufe während der vorgegebenen Meßperiode (TFAC) zur Berechnung der aufgelaufenen Summe

$$(y(i)=Y(i-1)+x'(i))$$

und bei Beendigung dieser Meßperiode Funktionsweise des Blockes (30) als Subtraktionsstufe sowie den Ablauf der Verschiebevorgänge des Inhaltes des Akkumulators (31), um das Endergebnis (Y) der aufgelaufenen Summe durch den numerischen Wert (Nζ) der Integrationskonstante (ζ) zu dividieren.

4. Verarbeitungskette nach Anspruch 3, dadurch gekennzeichnet, daß die Einrichtung (10, 16) für das Sampling und die Umwandlung in Digitalform, das Schieberegister (25) und die Speichereinrichtung (23) untereinander und mit einem ersten Eingang des Blockes (30) durch einen ersten Parallel-Datenbus (22) verbunden sind, wobei der Akkumulator (31) mit dem zweiten Eingang des Blockes (30) durch einen zweiten Parallel-Datenbus (39) verbunden ist und das Ablaufschaltwerk (14) bei jedem Empfang eines neuen Sampling-Meßsignales während der Meßperiode (TFAC) die folgenden Vorgänge steuert: die Addition des gewichteten numerischen Wertes (x'(i)), der diesem in dem Schieberegister (25) gespeicherten Sampling-Meßsignal entspricht, zu der im Akkumulator (31) enthaltenen aufgelaufenen Summe (y(i-1)) sowie—während des Divisionsvorganges durch Subtraktion und Rotation des Inhaltes des Akkumulators (31)—das Zuführen der von dem Block (30) im Verlaufe dieses Divisionsvorganges erzeugten aufeinanderfolgenden Überläufe (BW) zu dem Serien-Eingang (Ecs) des Schieberegisters (25), der die besagte numerische Größe (X) am Ende des Divisionsvorganges enthält.

5. Verarbeitungskette nach Anspruch 4, dadurch gekennzeichnet, daß der Akkumulator (31) aus einem am Ausgang des Blockes (30) angeschlossenen Akkumulator (32) schwacher Gewichtung und einem Akkumulator (33) starker Gewichtung besteht, die über ihre Serien-Eingänge und -Ausgänge untereinander zur Schleife geschaltet sind, um die Vorgänge der Rechts- und Linksverschiebung unter der Steuerung des Ablaufschaltwerkes (14) zu ermöglichen, wobei das Schieberegister (25), die Speichereinrichtung (23), die Akkumulatoren (32, 33) schwacher und starker Gewichtung sowie der Datenbus, (22, 39) eine Kapazität von M Bits haben, und daß das Ablaufschaltwerk den Teilungsvorgang durch Steuerung der folgenden Vorgänge steuert: M Rechtsverschiebungen des Inhaltes der Akkumulatoren (33, 32) starker und schwacher Gewichtung und dann die Funktionsweise des Blockes (30) als Subtraktionsstufe, um die Differenz zwischen dem Inhalt des Akkumulators (32) schwacher Gewichtung und des numerischen Wertes (Nζ) der Integrationskonstante zu berechnen, wobei diese Differenz der neue Inhalt des Akkumulators (32) schwacher Gewichtung wird, und ein Überlauf (BW) des Logikwertes "1" in das Schieberegister (25) eingegeben wird, wenn die obige Differenz positiv oder Null ist, und der Inhalt des Akkumulators (32) schwacher Gewichtung unverändert bleibt und ein Überlauf (BW) des Logikwertes "0" in das Schieberegister (25) eingegeben wird, wenn die obige Differenz negativ ist, wobei dem Subtraktionsvorgang eine Linksverschiebung des Inhaltes der Akkumulatoren (33, 32) starker und schwacher Gewichtung folgt und dieser Subtraktionsvorgang unter der Steuerung des Ablaufschaltwerkes (14) so lange wiederholt wird, bis M Linksverschiebungen stattgefunden haben, wobei dieser Quotient (X) nun in dem Schieberegister (25) enthalten ist.

6. Verarbeitungskette nach Anspruch 5, dadurch gekennzeichnet, daß das Ablaufschaltwerk (14) einer Steuereinrichtung (26) zugeordnet ist, die wahlweise dans Zuführen des Überlaufs (BW) eines Logikwertes "1" oder eines Logikwertes "0" zu dem Serieneingang des Schieberegisters (25) steuert, wobei der Inhalt des Schieberegisters auf einen ersten Logikwert vor dem Divisionsvorgang initialisiert wird und ein entgegengesetzter Logikwert während der ersten Rechts- und Linksverschiebung des Inhaltes der Akkumulatoren (32, 33) in seinem Serieneingang (Ecs) eingegeben wird, wobei das Ablaufschaltwerk diese Rechts- und Linksverschiebungen so lange steuert, bis der entgegengesetzte Logikwert am Serienausgang des Schieberegisters (25) entdeckt worden ist.

7. Verarbeitungskette nach einem der Ansprüche 3 bis 6, dadurch gekennzeichnet, daß die Einrichtung (10, 16) für das Sampling und die Umwandlung eine Sampler-Sperreinrichtung (10) sowie einen Analog- Digitalwandler (16) aufweist, der am Ende jeder Umwandlung an seinem Ausgang einen numerischen Wert liefert, der gleich ist:

$$x(i) = INT\left[\frac{ABS\ Ve\ (t = i \cdot tc)}{Vref} \cdot 2^N + N_0\right],$$

worin

INT [ ] die Funktion "ganzzahliger Teil" darstellt;

ABS (V (t = i · tc)) der Absolutwert des Sampling-Meßsignales des Ranges i des Signales Ve (t) ist, der von der Sampler-Sperreinrichtung (10) gespeichert wird;

V ref eine an den Wandler angelegte Bezugsspannung ist;

N die Anzahl der Bits der Quantifizierungsschritte des Wandlers ist;

$N_0$ eine Konstante zur Mittelung des Quantifizierungsfehlers des Wandlers ist;

tc die Samplingperiode ist.

8. Verarbeitungskette nach Anspruch 7, dadurch gekennzeichnet, daß die sich bei der Division ergebende Größe (X) gleich ist:

$$X = INT\left[\frac{Y}{N\zeta} + M_0\right],$$

worin

INT [ ] die Funktion "ganzzahliger Teil" darstellt;

Y das Ergebnis der aufgelaufenen Summe ist, die am Ende der Meßperiode in dem Akkumulator (31) enthalten ist;

$N\zeta$ der numerische Wert der Integrationskonstante ist;

$M_0$ eine Konstante ist, die die Adaption der Funktion "ganzzahliger Teil" erlaubt.

9. Verarbeitungskette nach Anspruch 3, dadurch gekennzeichnet, daß sie ein Ergebnisregister (20) aufweist und daß das Ablaufschaltwerk (14) nacheinander die folgenden Vorgänge steuert: das Speichern des numerischen Wertes (x(i)) des letzten Sampling-Meßsignales, das am Ausgang der Einrichtung (10, 16) für das Sampling und die Umwandlung zur Verfügung steht, in dem Ergebnisregister (20) sowie die Übertragung des Inhaltes des Ergebnisregisters (20) auf das Schieberegister (25) für den Vorgang der Gewichtung durch eine Rechtsverschiebung.

10. Verarbeitungskette nach einem der Ansprüche 3 bis 8, dadurch gekennzeichnet, daß sie eine Decodiereinrichtung (38) aufweist, die mit dem Ausgang des Akkumulators (31) verbunden ist und durch das Ablaufschaltwerk (14) zu Beginn jeder vorgegebenen Meßperiode (TFAC) wieder initialisiert wird, wobei die Decodiereinrichtung (38) ein Überlaufsignal (42) abgibt, wenn der Inhalt (y(i)) des Akkumulators (31) während der Meßperiode (TFAC) größer oder gleich einem vorgegebenen Wert wird.

11. Verarbeitungskette nach Anspruch 10 in Verbindung mit Anspruch 5, dadurch gekennzeichnet, daß der vorgegebene Wert gleich $N \cdot (2^M - 1)$ ist, wobei $2^M - 1$ der im Fall eines Überlaufes vorhergehende Quotient der Division (X) ist.

**Claims**

1. Process for processing the analog output signal of a sensor, in particular of an accelerometric sensor for the detection of pinking of an internal combustion engine, allowing a full-wave rectification and an integration of the said signal to be carried out during a specified measuring period (TFAC) and a digital value (X) to be delivered that is representative of the output signal of the sensor which is rectified and integrated over the measuring period, according to which process the analog signal (Ve(t)) is sampled and converted into digital form during the measuring period (TFAC), a digital value representing the last sample acquired (x(i)) is temporarily stored, characterized in that each sample (x(i)) converted into digital form and temporarily stored is weighted by multiplying it by a coefficient (C(i)) and, during the acquisition of the next sample, the weighted digital value (x'(i)) of the said sample is then added to the cumulative sum (y(i−1)) of the weighted digital values of the samples acquired since the start of the measuring period (TFAC), the said storage and addition operations are repeated throughout the total duration of the measuring period (TFAC) and, at the end of that period, the result of the cumulative sum (Y) of the weighted digital values (x'(i)) is divided by a digital value (NZ) representing the integration constant of the output signal of the sensor, the quotient of the said division representing the said digital value (X).

2. Process according to Claim 1, characterized in that the weighting coefficient (C(i)) is equal to $2^{-j(i)}$, j(i) being an integer whose value depends on the position (i) of the sample concerned.

3. Digital processing sequence for the implementation of the process according to either of Claims 1 and 2, including means (10, 16) of sampling the analog signal and of converting the acquired samples to digital form, characterized in that a shift register (25), means (23) of storing the digital value (NZ) of the integration constant (Z), a conditional addition and subtraction unit (30) connected to the shift register (25) and to the storage means (23), storage means (14) for numbers j(i) defining weighting coefficients, an accumulator (31) connected to the output of the said unit (30) and a sequencer (14) which controls the sampling and the conversion into digital form of the samples by the said means (10, 16), one of the right shifts of the content (x(i)) of the shift register (25) equal in number to the number j(i) stored for the sample of the position i, the storage of the weighted digital value (x'(i)) representing the last sample acquired (x(i)) in the shift register (25), the operation of the said unit (30) as an adder during the measuring period (TFAC) determined for the computation of the cumulative sum

$$(y(i) = y(i-1) + x'(i))$$

and, in response to the detection of the end of the said period, the operation of the unit (30) as a subtractor and the running of operations of rotation of the content of the accumulator (31) for dividing the final result (Y) of the cumulative sum by the digital value (N$\zeta$) of the integration constant ($\zeta$).

4. Sequence according to Claim 3, characterized in that the means (10, 16) of sampling and of conversion into digital form, the shift register (25) and the means of storage (23) are interconnected with each other and with a first input of the unit (30) by a first parallel-connection bus (22), the accumulator (31) being connected to the second input of the unit (30) by a second parallel-connection bus (39), the sequencer (14) controlling, on each acquisition of a new sample during the measuring period (TFAC), the adding of the weighted digital value (x'(i)) representing this sample stored in the shift register (25) to the cumulative sum (y(i−1)) contained in the accumulator (31) and, during the division operation by conditional subtraction and rotation of the content of the accumulator (31), the loading of the successive carries (BW) produced by the unit (30) during the said division operation at the serial loading input (Ecs) of the shift register (25) which contains the said digital value (X) at the end of the division operation.

5. Sequence according to Claim 4, characterized in that the accumulator (31) contains a least significant bits accumulator (32) connected to the output of the unit (30) and a most significant bits accumulator (33) looped between each other by their serial inputs and outputs to allow right and left shift operations under the control of the sequencer (14), the shift register (25), the means of storage (23), the least (32) and most (33) significant bits accumulators and the buses (22, 39) having a capacity of M bits, the sequencer being adapted to control the said division operation by controlling M right shifts of the content of the most (33) and least (32) significant bits accumulators and then the operation of the unit (30) as a subtractor in order to compute the difference between the content of the least significant bits accumulator (32) and the digital value (N$\zeta$) of the integration constant, this difference becoming the new content of the least significant bits accumulator (32) and a carry (BW) at logic "1" level being loaded into the shift register (25) if the said difference is positive or zero and the content of the least significant bits accumulator (32) remaining unchanged and a carry (BW) at logic "0" level being loaded into the shift register (25) if the said difference is negative, this subtraction operation being followed by a left shift of the content of the most (33) and least (32) significant bits accumulators and being repeated under the control of the sequencer (14) until M left shifts have been carried out, the said quotient (X) being then contained in the shift register (25).

6. Sequence according to Claim 5, characterized in that the sequencer (14) is associated with means (26) of selectively controlling the loading of the said carry (BW), at logic "1" level or at logic "0" level at the serial loading input of the shift register (25), the content of the said register being initialised at a first logic level before the division operation and an opposite logic level being loaded at its serial input (Ecs) during the first right and left shift of the content of the accumulators (32, 33), the sequencer controlling the said right and left shifts until the detection of the said opposite logic level at the serial read output of the shift register (25).

7. Sequence according to any one of Claims 3 to 6, characterized in that the means (10, 16) of sampling and conversion include a sampler-inhibitor (10) and an analog-digital converter (16) having at the output, at each end of a conversion, a digital value equal to:

$$x(i) = INT[\frac{ABS\ Ve(t=i \cdot tc)}{Vref} \cdot 2^N + N_0],$$

where:
—INT [ ] represents the "integer part" funktion;
—ABS (Ve(t=i · tc)) is the absolute value of the sample in position i of the signal Ve(t), stored by the sampler-inhibitor (10);
—V ref is a reference voltage applied to the converter;
—N is the number of quantization bits of the converter;
—$N_0$ is a centering constant of the quantization error of the converter;
—tc is the sample period.

8. Processing sequence according to Claim 7, characterized in that the said value (X) resulting from the division is equal to:

$$X = INT[\frac{Y}{N\zeta} + M_0],$$

where:
—INT [ ] represents the "integer part" function;
—Y is the result of the cumulative sum contained in the accumulator (31) at the end of the measuring period;
—N$\zeta$ is the digital value of the integration constant;
—$M_0$ is a constant allowing the adaption of the "integer part" function.

9. Sequence according to Claim 3, characterized in that it includes a result register (20) and in that the sequencer (14) sequentially controls the storage in the result register (20) of the digital value (x(i)) of the last sample acquired available at the output of the means of sampling and conversion (10, 16) and the transfer of the content of the result register (20) into the shift register (25) for the weighting operation by right shifting.

10. Sequence according to any one of Claims 3 to 8, characterized in that it includes a decoder (38) connected to the output of the accumulator (31) and reset by the sequencer (14) at each start of a specified measuring period (TFAC), the decoder (38) being adapted to send an overflow signal (42) if the content ($y(i)$) of the accumulator (31) becomes greater than or equal to a predetermined value during the measuring period (TFAC).

11. Sequence according to Claim 10, when appendant to Claim 5, characterized in that the said predetermined value is equal to $N\zeta \cdot (2^M - 1)$, $2^M - 1$ being the anticipated quotient of the said division (X) in the case of an overflow.

14

Fig.1
(Art antérieur)

Fig.2 (Art antérieur)

TFAC

1

**Fig.3**
(Art antérieur)

$V_S$ — Transfert idéal — $E\ell$ — $Eg$ — $Ve$ — $E_0$

**Fig.6**

$N_S$ — $2^N - 1$ — $D$ — $Ve(t)$ — $-Vref$ — $+Vref$

**Fig.7**

$N_S$ — (Signe −) — (Signe +) — 3 — 2 — 1 — $Ve$

2

Fig.4

EP 0 187 081 B1

Fig. 5a

$Ve(t)$

$t_c$

$x_1$ $x_2$ $x_3$ $x_4$ $x_5$ $x_6$ $x_7$ $x_8$ $x_9$ $x_{10}$ $x_{11}$ $x_{12}$ $x_{13}$ $x_{14}$ $x_{15}$

$t$

Fig. 5b

$N_S$

$2^{N-1}$

$o$

$t$

Fig. 5c

$C(i)$

$1$
$1/2$

$t_c$

$t$

Fig. 5d

$Kmux(2^N-1)$ $y_i$

$\sum_{i=1}^{K+1} c_i x_i$

$c_1 x_1 + c_2 x_2 + c_3 x_3$

$c_1 x_1 + c_2 x_2$

$c_1 x_1$

$0$

$X$

$T$

$t$

$TFAC$

Fig. 8

EP 0 187 081 B1

Fig. 9

EP 0 187 081 B1

Fig.10

```
                              ┌──────────────┐
                              │    Début     │
                              └──────┬───────┘
                                     │
          ┌──────────────────────────────────────────────┐
          │ Décalage droite  accumulateur poids          │
          │ fort - accumulateur  poids faible            │
   100 ──│         ┌──────────◄──────────┐                │
          │         │  ┌────┐  ┌────┐     │                │
          │         └──│ 33 │─►│ 32 │─────┘                │
          │            └────┘  └────┘                      │
          └──────────────────────┬───────────────────────┘
                                  │
                            ◇─────────────◇
   101 ──                   │  Mième      │  non
                            │  décalage   │──────────►
                            ◇─────────────◇
                                  │ oui
                                  │
                            ◇─────────────◇
   102 ──                   │ Accupf-Nz ≥ 0│  non (BW=0)
                            ◇─────────────◇──────────►
                                  │ oui   (BW=1)
                                  │
   103 ── ┌──────────────────────────────┐
          │ Accupf = Accupf - Nz          │
          └──────────────┬───────────────┘
                         │
   104 ── ┌──────────────────────────────┐
          │ BW → Registre à décalage 25   │
          └──────────────┬───────────────┘
                         │
          ┌──────────────────────────────────────────────┐
          │ Décalage gauche accumulateur                 │
          │ poids fort-accumulateur  poids faible        │
   105 ──│         ┌──────────►──────────┐                │
          │         │  ┌────┐  ┌────┐     │                │
          │         └─►│ 33 │◄─│ 32 │─────┘                │
          │            └────┘  └────┘                      │
          └──────────────────────┬───────────────────────┘
                                  │
                            ◇─────────────◇
   106 ──                   │  Mième      │  non
                            │  décalage   │──────────►
                            ◇─────────────◇
                                  │ oui
                            ┌──────────┐
   107 ──                   │   FIN    │
                            └──────────┘
```